# EUROPÄISCHE PATENTANMELDUNG

(11) **EP 3 572 956 A1**
(43) Veröffentlichungstag der Anmeldung: **27.11.2019**
(21) Anmeldenummer: 18174075.4
(22) Anmeldetag: 24.05.2018
(51) Int. Cl.: G06F 17/50

(54) **ERSTELLUNG EINES INTERDISZIPLINÄREN SIMULATIONSMODELLS**

(71) Anmelder: Siemens Aktiengesellschaft, 80333 München (DE)
(72) Erfinder: Baudisch, Thomas, 86938 Schondorf am Ammersee (DE); Brandstetter, Veronika, 81673 München (DE); Schenk, Tim, 84034 Landshut (DE); Wehrstedt, Jan Christoph, 81829 München (DE)

(57) **Zusammenfassung**

Die Erfindung betrifft die Computer-gestützte Erstellung eines interdisziplinären Simulationsmodells (9) eines physikalisch-technischen Geräts. Basierend auf einer vorgegebenen Datenbank, welche indikativ für das physikalisch-technische Verhalten des Geräts ist, werden disziplinspezifische Simulationskomponenten (FMUb-FMUd) des Geräts und mindestens eine Schnittstelle (21-35) für jede der Simulationskomponenten (FMUb-FMUd) erstellt, so dass Zustände der Simulationskomponenten (FMUb-FMUd) mittels der Schnittstellen (21-35) miteinander synchronisierbar sind. Dabei modelliert jede disziplinspezifische Simulationskomponente (FMUb-FMUd) einen entsprechenden disziplinspezifischen Aspekt des physikalischtechnischen Verhaltens des Geräts. Die erstellten Simulationskomponenten (FMUb-FMUd) stellen zusammen mit den Schnittstellen (21-35) das Simulationsmodell (9) dar.

## Beschreibung

Die vorliegende Erfindung betrifft die automatische Erstellung eines interdisziplinären Simulationsmodells für ein physikalisch-technisches Gerät.

Bei der dynamischen Systemsimulation werden unterschiedliche Aspekte (d.h. Domänen oder Disziplinen, wie z.B. Thermik und Elektrik) eines Systems oder Geräts betrachtet. Diese unterschiedlichen Aspekte oder Domänen werden häufig mit sogenannten Co-Simulationsansätzen analysiert, bei denen für jeden Aspekt ein disziplinspezifisches Simulationsmodell bzw. eine disziplinspezifische Simulationskomponente verwendet wird. Diese disziplinspezifischen Simulationskomponenten, welche wiederum aus einzelnen verbundenen Instanzen von Simulationskomponenten bestehen können, werden mit Co-Simulationstechniken gekoppelt. Das heißt, es werden zu bestimmten Simulationszeitpunkten relevante Ergebnisse von jeder disziplinspezifischen Simulationskomponente zur Verfügung gestellt, welche dann als Eingabe für den nächsten Zeitschritt der oder den anderen disziplinspezifischen Simulationskomponenten dienen. Die jeweilige disziplinspezifische Simulationskomponente rechnet dann mit diesen Eingaben, um ihrerseits zu dem nächsten bestimmten Simulationszeitpunkt ihre Ergebnisse (für den nächsten Datenaustausch) zu berechnen.

Die disziplinspezifischen Simulationskomponenten werden heutzutage unabhängig voneinander im Wesentlichen manuell von entsprechenden Experten des der disziplinspezifischen Simulationskomponente entsprechenden Aspekts erstellt. Dabei muss darauf geachtet werden, dass die jeweils erstellte disziplinspezifische Simulationskomponente mit anderen disziplinspezifischen Simulationskomponenten koppelbar ist, um den oben beschriebenen Datenaustausch zu realisieren und somit eine funktionierende Co-Simulation zu gewährleisten.

Die vorliegende Erfindung stellt sich die Aufgabe, die Erstellung eines interdisziplinären Simulationsmodells zu harmonisieren und zu automatisieren.

Erfindungsgemäß wird diese Aufgabe durch ein Verfahren zur Erstellung eines interdisziplinären Simulationsmodells nach Anspruch 1, durch einen Computer nach Anspruch 11, durch ein Computerprogrammprodukt nach Anspruch 14 und durch einen elektronisch lesbaren Datenträger nach Anspruch 15 gelöst. Die abhängigen Ansprüche definieren bevorzugte und vorteilhafte Ausführungsformen der vorliegenden Erfindung.

Im Rahmen der vorliegenden Erfindung wird ein Computer-implementiertes Verfahren zur Erstellung eines interdisziplinären Simulationsmodells eines physikalisch-technischen Geräts bereitgestellt. Dabei umfasst das erfindungsgemäße Verfahren folgende Schritte, welche auf einer vorgegebenen Datenbank basieren, mit welcher Aussagen über das physikalisch-technische Verhalten des Geräts ermittelt werden können:
Erstellen von disziplinspezifischen Simulationskomponenten des Geräts. Dabei modelliert jede dieser disziplinspezifischen Simulationskomponenten einen entsprechenden disziplinspezifischen Aspekt des physikalisch-technischen Verhaltens des Geräts. Disziplinspezifische Aspekte können beispielsweise elektrostatische, magnetische, elektromagnetische, elektrische, thermodynamische, mechanische, hydraulische, automatisierte, usw. Aspekte sein.

Erstellen einer oder mehrerer Schnittstellen für jede der erstellten Simulationskomponenten, so dass Zustände der Simulationskomponenten mit Hilfe dieser Schnittstellen miteinander synchronisiert werden können. Mit Hilfe dieser Schnittstellen ist es demnach möglich, Ausgaben einer Simulationskomponente als Eingaben einer anderen Simulationskomponente zur Verfügung zu stellen.

Die erstellten Simulationskomponenten bilden zusammen mit den Schnittstellen das interdisziplinäre Simulationsmodell.

Indem die disziplinspezifischen Simulationskomponenten und die sie verbindenden Schnittstellen automatisch ausgehend von der das physikalisch-technische Verhalten des zu simulierenden Geräts abspeichernden Datenbank erstellt werden, wird schließlich auch das interdisziplinäre Simulationsmodell automatisch erstellt. Mit diesem erfindungsgemäß erstellten Simulationsmodell kann dann eine Co-Simulation durchgeführt werden, bei welcher die verschiedenen disziplinspezifischen Aspekte des Geräts in einer verteilten Weise (d.h. mit den verschiedenen disziplinspezifischen Simulationskomponenten) modelliert und simuliert werden, wobei die Wechselwirkung zwischen den verschiedenen Domänen anhand der über die Schnittstellen gekoppelten disziplinspezifischen Simulationskomponenten modelliert wird.

Dabei wird unter einer Datenbank ein beliebiger Speicherort von Daten (z.B. auch in einer Cloud) verstanden. Beispielsweise kann es sich bei dieser Datenbank oder bei diesem Speicherort um ein Engineering-Werkzeug handeln, welchem das physikalisch-technische Verhalten des Geräts in irgendeiner Form entnommen werden kann.

Erfindungsgemäß werden auch Web- oder Cloud-Anwendungen unterstützt. D.h. das erfindungsgemäße Verfahren kann auch Webbasiert oder Cloud-basiert realisiert werden.

Dabei umfasst das Erstellen zumindest einer der Simulationskomponenten insbesondere ein Erstellen eines Funktionsmodells des Verhaltens des physikalisch-technischen Geräts in der Disziplin bzw. bezüglich des Aspekts dieser Simulationskomponente. Mittels dieses Funktionsmodells werden zu bestimmten Simulationszeitpunkten anhand von Eingangswerten der jeweiligen Simulationskomponente Ausgangswerte derselben Simulationskomponente bestimmt. Die Ausgangswerte können dann als Eingangswerte einer anderen Simulationskomponente, welche eingangsseitig mit der Simulationskomponente verbunden ist, bereitgestellt werden.

Damit können die von der Simulationskomponente mittels des Funktionsmodells erstellten Ausgangswerte von der anderen Simulationskomponente als Eingangswerte verwendet werden, um zum selben Simulationszeitpunkt oder zum nächsten Simulationszeitpunkt mit dem Funktionsmodell der anderen Simulationskomponente die Ausgangswerte der anderen Simulationskomponente zu berechnen.

Das Funktionsmodell kann beispielsweise eine numerische Simulation auf Grundlage von physikalischen Differenzialgleichungen und/oder signalflussbasierte Beschreibungen und/oder diskrete Systembeschreibungen umfassen.

Darüber hinaus kann das Funktionsmodell für eine oder für mehrere Simulationskomponenten eine vorgegebene analytische Abhängigkeit und/oder Randwerte umfassen.

Die vorgegebene analytische Abhängigkeit und/oder die Randwerte werden insbesondere anhand einer Plausibilitätsüberprüfung erzeugt, mit welcher eine Interoperabilität zwischen verschiedenen der Simulationskomponenten unter Berücksichtigung der Schnittstellen überprüft wird.

Randwerte müssen beispielsweise für Simulationskomponenten gesetzt werden, wenn diese Randwerte Schnittstellen zu anderen Domänen betreffen, welche für das zu erstellende interdisziplinäre Simulationsmodell nicht relevant sind oder nicht explizit simuliert werden sollen. Die Notwendigkeit zum Setzen von Randwerten kann beispielsweise anhand der Plausibilitätsüberprüfung automatisch ermittelt werden.

Des Weiteren können Anfangswerte als Eingangswerte für bestimmte Simulationskomponenten zum ersten Simulationszeitpunkt vorgegeben werden.

Die Schnittstellen werden insbesondere im Rahmen des FMI-Standards als Function Mockup Interface (FMI) erstellt. Bei den Schnittstellen kann es sich aber auch allgemein um Co-Simulations-Schnittstellen handeln.

Die disziplinspezifischen Simulationskomponenten können erfasst werden oder automatisch ausgehend von einer zugehörigen physikalischen Komponente des zu simulierenden Geräts erstellt werden.

Wenn die Simulationskomponenten automatisch ausgehend von einer oder von mehreren entsprechenden physikalischen Komponenten des zu simulierenden Geräts erstellt werden, beinhaltet die Datenbank, die indikativ für das physikalisch-technische Verhalten des Geräts ist, beispielsweise Informationen für ein Planungswerkzeug oder Engineering-Werkzeug (z.B. COMOS (COMponent Object Server)) bezüglich dieser physikalischen Komponente(n). Das zu simulierende Gerät kann bezüglich des Planungswerkzeugs (z.B. einer Systemsimulationssoftware) eine oder mehrere zusammenwirkende physikalische Komponenten umfassen. Jede dieser physikalischen Komponenten umfasst in der Regel mehrere disziplinspezifische Komponenten, um das Verhalten der jeweiligen physikalischen Komponente für das Planungswerkzeug in der entsprechenden Domäne abzubilden. Ausgehend von einer jeweiligen disziplinspezifischen Komponente kann dann automatisch die zugehörige disziplinspezifische Simulationskomponente erstellt werden.

Die vorgegebene Datenbank kann eine objektorientierte Bibliothek dieses Planungswerkzeugs oder eines Projektierungswerkzeugs zur Anlagensteuerung umfassen.

Erfindungsgemäß ist es möglich, dass die zu betrachtenden Disziplinen bzw. Domänen vorgegeben werden, so dass nur diejenigen disziplinspezifischen Simulationskomponenten für das zu simulierende Gerät erstellt werden, welche diesen zu betrachtenden oder vorgegebenen Disziplinen entsprechen.

Diese Vorgabe der zu betrachtenden Disziplinen kann beispielsweise durch eine Auswahl im Projektierungswerkzeug erfolgen.

Gemäß einer erfindungsgemäßen Ausführungsform umfasst das Erstellen der Schnittstellen ein automatisches Generieren jeweils einer Kopplungstabelle für zwei der Simulationskomponenten, deren Schnittstellen direkt gekoppelt sind, ausgehend von Abhängigkeiten zwischen den beiden Disziplinen der Simulationskomponenten, welche in der vorgegebenen Datenbank hinterlegt sind. Dabei beschreibt die jeweilige Kopplungstabelle ein Zusammenspiel zwischen den Schnittstellen und damit zwischen den direkt gekoppelten Simulationskomponenten.

Beispielsweise ein Co-Simulationsmaster kann die Simulationskomponenten zusammen mit den Kopplungstabellen einlesen, um ausgehend davon auch die Schnittstellen und damit das interdisziplinäre Simulationsmodell zu erstellen.

Im Rahmen der vorliegenden Erfindung wird auch ein Computer bereitgestellt, welcher einen Prozessor und Speichermittel umfasst. Der Prozessor ist ausgestaltet, um einen Programmcode, welcher in den Speichermitteln gespeichert ist, auszuführen. Durch das Ausführen dieses Programmcodes wird ein interdisziplinäres Simulationsmodell eines physikalischtechnischen Geräts erstellt. Der Computer ist weiter ausgestaltet, um durch das Ausführen dieses Programmcodes basierend auf einer vorgegebenen Datenbank, welche indikativ für das physikalisch-technische Verhalten des Geräts ist, disziplinspezifische Simulationskomponenten des Geräts und mindestens eine Schnittstelle für jede dieser Simulationskomponenten zu erstellen, so dass Zustände der Simulationskomponenten mittels der Schnittstellen miteinander synchronisierbar sind. Dabei modelliert jede disziplinspezifische Simulationskomponente einen entsprechenden disziplinspezifischen Aspekt des physikalisch-technischen Verhaltens des Geräts. Die erstellten Simulationskomponenten stellen zusammen mit den Schnittstellen das Simulationsmodell dar.

Der erfindungsgemäße Computer kann ausgestaltet sein, so dass das erfindungsgemäße Verfahren Web-basiert oder in einer Cloud ausgeführt wird.

Die Vorteile des erfindungsgemäßen Computers entsprechen den Vorteilen des erfindungsgemäßen Verfahrens, die vorab im Detail ausgeführt sind, so dass hier auf eine Wiederholung verzichtet wird.

Gemäß einer erfindungsgemäßen Ausführungsform ist der Computer ausgestaltet, um mittels des vorab erstellten interdisziplinären Simulationsmodells eine Simulation des physikalisch-technischen Geräts auszuführen.

Des Weiteren beschreibt die vorliegende Erfindung ein Computerprogrammprodukt, insbesondere eine Software, welche man in einen Speicher eines Computers laden kann. Mit diesem Computerprogrammprodukt können alle oder verschiedene vorab beschriebene Ausführungsformen des erfindungsgemäßen Verfahrens ausgeführt werden, wenn das Computerprogrammprodukt in dem Prozessor des Computers ausgeführt wird. Dabei benötigt das Computerprogrammprodukt eventuell Programmmittel, z.B. Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode (z.B. C++), der noch kompiliert und gebunden oder der nur interpretiert werden muss, oder um einen ausführbaren Softwarecode handeln, der zur Ausführung nur noch in den entsprechenden Prozessor zu laden ist.

Schließlich offenbart die vorliegende Erfindung einen elektronisch lesbaren Datenträger, z.B. eine DVD, ein Magnetband, eine Festplatte oder einen USB-Stick, auf welchem elektronisch lesbare Steuerinformationen, insbesondere Software (vgl. oben), gespeichert ist. Wenn diese Steuerinformationen (Software) von dem Datenträger gelesen und in dem Computer gespeichert werden, können alle erfindungsgemäßen Ausführungsformen des vorab beschriebenen Verfahrens durchgeführt werden.

Die vorliegende Erfindung ermöglicht, dass Co-Simulationen implizit von einem System-Engineering erstellt werden können.

Bei Planungswerkzeugen oder Engineering-Werkzeugen (wie z.B. COMOS) wird in Vorbereitung auf eine spätere Kopplung jede einzelne Komponente des Planungswerkzeugs domänenspezifisch aufgebaut. Domänenspezifische bzw. disziplinspezifische Komponenten können aus Projektierungs- und Engineering-Sicht (z.B. in COMOS) zwar zur selben physikalischen Komponente des zu simulierenden Geräts gehören, aber verschiedenes, disziplinspezifisches Verhalten abbilden. Beispielsweise weist ein Motor neben einem Steuergerät (das somit Software oder Automatisierung repräsentiert) auch ein elektrisches, ein mechanisches, ein hydraulisches, ein thermisches, usw. Verhalten auf, die alle disziplinspezifisch simuliert werden.

Die vorliegende Erfindung überführt quasi die Information aus dem Planungswerkzeug (z.B. COMOS) in die Welt der Simulation, indem für jede Komponente des zu simulierenden Geräts für das Planungswerkzeug vorab spezifiziert wird, wie sich die komponenteninterne Kopplung der Disziplinen darstellt.

In Engineering-Werkzeugen, wie z.B. COMOS, werden die disziplinspezifischen Komponenten des zu simulierenden Geräts bereits wie vorab beschrieben modelliert. Wie es im Folgenden mit Bezug zu den Figuren noch im Detail erläutert wird, wird beim Anlegen einer entsprechenden Komponente für beispielsweise eine Pumpe in der Hydrauliksicht automatisch ein disziplinspezifischer bzw. domänenspezifischer Repräsentant in jeder weiteren relevanten Domäne angelegt, zwischen denen zu navigieren ist. Das heißt in der hydraulischen Sicht befindet sich ein Repräsentant bzw. eine disziplinspezifische Komponente für eine Pumpe, welcher zwei Anschlüsse für den Zufluss und für den Abfluss aufweist. Die Eigenschaften der Komponente, welche sich beispielsweise für eine Pumpe setzen lassen, entsprechen den hydraulischen Eigenschaften wie den Druck-Durchfluss-Kennlinien und bei geregelten Pumpen der Drehzahlabhängigkeit.

Die Erfindung bietet zum einen die Möglichkeit, Simulationskomponenten des Simulationsmodells für verschiedene Domänen bzw. Disziplinen zu modellieren. Zum anderen können die Schnittstellen zwischen verschiedenen disziplinspezifischen Simulationskomponenten automatisch identifiziert werden, so dass die Schnittstellen der Simulationskomponenten automatisch in Form von Co-Simulationskopplungen generiert werden können, wobei diese Kopplungen direkt und eindeutig zugeordnet sind.

Im Folgenden wird die vorliegende Erfindung anhand bevorzugter erfindungsgemäßer Ausführungsformen im Detail erläutert.
- In Fig. 1: ist eine Co-Simulations-Architektur gemäß FMI-Standard dargestellt.
- In Fig. 2: ist ein erfindungsgemäßer Computer schematisch dargestellt.
- In Fig. 3: ist schematisch dargestellt, wie ausgehend von einem Planungswerkzeug disziplinspezifische Simulationskomponenten erstellt werden.
- In Fig. 4: ist schematisch dargestellt, wie ausgehend von einem Planungswerkzeug disziplinspezifische Simulationskomponenten und zugehörige Schnittstellen und damit das gesamte Simulationsmodell erstellt werden.
- In Fig. 5: ist ein Flussplan eines erfindungsgemäßen Verfahrens dargestellt.

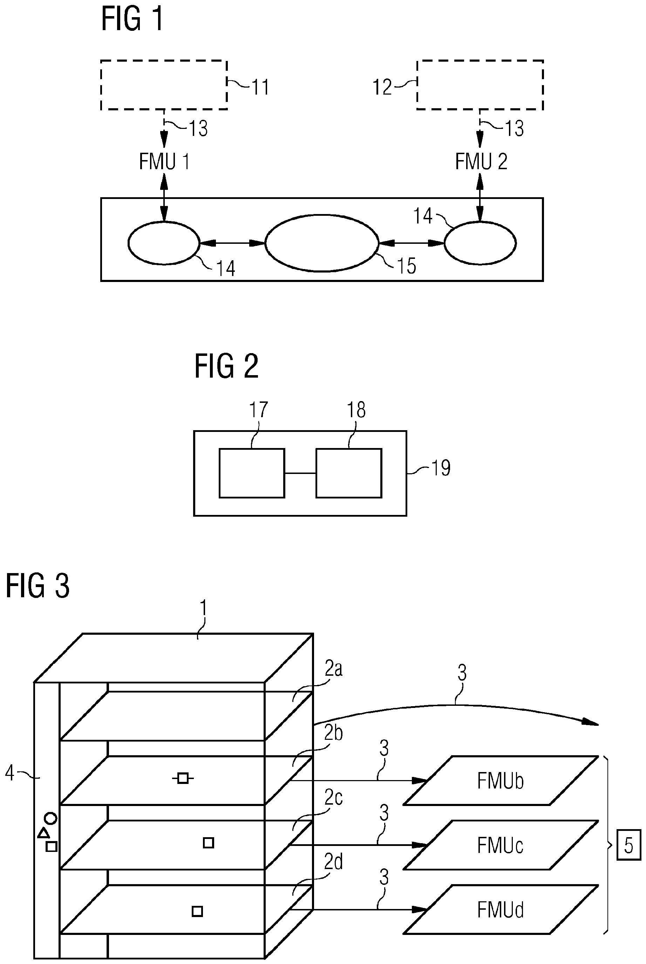

In Fig. 1 ist eine Co-Simulations-Architektur dargestellt.

Aus einem ersten AMESim-Modell 11 wird eine erste FMU 1 und aus einem zweiten AMESim-Modell 12 wird eine zweite FMU 2 in einem Vorverarbeitungsschritts exportiert. AMESim ist eine Simulationssoftware zur Modellierung und zur Analyse von physikalisch-technischen Geräten in mehreren Domänen. Die erste FMU 1 ("Functional Mock Up Unit") und die zweite FMU 2 wirken jeweils mit einem FMI-Client 14 zusammen, welcher wiederum mit einem CosMOS-Master 15 zusammenarbeitet. Es sei darauf hingewiesen, dass AMESim, CosMOS und FMI nur beispielhaft erwähnt sind und erfindungsgemäß durch andere Anwendungen oder Programme bzw. Schnittstellen ersetzt werden können.

Man erkennt anhand von Fig. 1, dass die disziplinspezifischen Simulationsmodelle 11, 12 separat von Domänenexperten in einer dafür geeigneten Simulationsumgebung modelliert werden. Anschließend werden diese Modelle 11, 12 jeweils mit einer Beschreibung ihrer Schnittstelle veröffentlicht, welche dann für die Kopplung der Modelle 11, 12 herangezogen werden kann. Die Veröffentlichung der Schnittstelle kann beispielsweise in dem FMI-Standard erfolgen.

In Fig. 2 ist ein erfindungsgemäßer Computer 19 dargestellt, welcher einen Prozessor 17 und einen Speicher 18 umfasst. Dieser Computer 19 ist ausgestaltet, um einen Programmcode auszuführen, welcher in dem Speicher 18 gespeichert ist, um dadurch ein interdisziplinäre Simulationsmodell eines physikalisch-technischen Geräts erfindungsgemäß zu erstellen.

In Fig. 3 ist schematisch dargestellt, wie ausgehend von einem Planungswerkzeug 1 für ein physikalisch-technisches Gerät disziplinspezifische Simulationskomponenten FMUb-FMUd eines interdisziplinären Simulationsmodells mittels einer automatischen Generierung 3 erzeugt werden.

Das Planungswerkzeug 1, beispielsweise eine Systemsimulationssoftware, umfasst neben einer Bibliothek 4 für jede physikalische Komponente des Geräts eine oder mehrere disziplinspezifische Komponenten 2a-2d, welche quasi einen domänenspezifischen Repräsentanten für jede Domäne darstellen, zwischen denen navigiert werden kann.

Bei dem in Fig. 3 dargestellten Planungswerkzeug wird als physikalisch-technisches Gerät eine Pumpe modelliert, welche zur Vereinfachung nur eine physikalische Komponente umfasst. Das heißt, die Pumpe wird nur mittels einer physikalischen Komponente moduliert. Diese physikalische Komponente bzw. die Pumpe wird anhand von vier disziplinspezifischen Komponenten 2a-2d modelliert, wobei die erste Komponente 2a die Elektrik-Domäne, die zweite Komponente 2b die Hydraulik-Domäne, die dritte Komponente 2c die Mechanik-Domäne und die vierte Komponente 2d die Automatisierungs-Domäne beschreibt.

Bei der in Fig. 3 dargestellten Ausführungsform werden für die drei Komponenten 2b-2d automatisch jeweils eine disziplinspezifische Simulationskomponente FMUb-FMUd erstellt. Zusätzlich wird ausgehend von den vier Komponenten 2a-2d automatisch eine Beschreibung 5 der Kopplung der erstellten Simulationskomponenten FMUb-FMUd erzeugt.

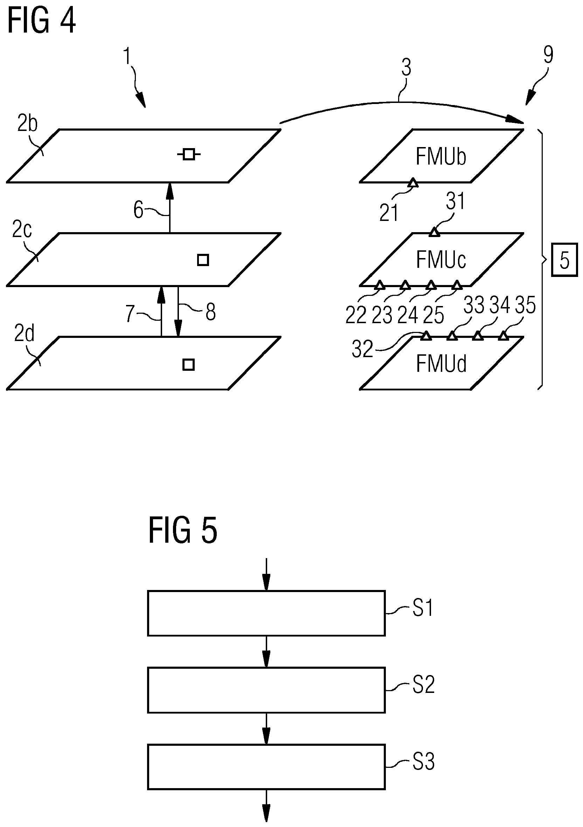

Auch in Fig. 4 ist schematisch dargestellt, wie ausgehend von dem Planungswerkzeug 1 für das physikalisch-technische Gerät die Simulationskomponenten FMUb-FMUd mittels automatischer Generierung 3 erzeugt werden, wobei in Fig. 4 zusätzlich die automatische Erstellung der Schnittstellen 21-35 der erstellten Simulationskomponenten FMUb-FMUd dargestellt ist.

Man erkennt, dass die Komponente 2d, welche die Automatisierung der Pumpe darstellt, bestimmte Informationen 7, 8 mit der Komponente 2c, welche die Mechanik (das Antriebsverhalten) der Pumpe darstellt, austauscht. Während die Komponente 2d an die Komponente 2c meldet, ob die Pumpe angeschaltet oder ausgeschaltet sein soll und einen Vorgabewert für die pro Zeiteinheit zu pumpende Stoffmenge liefert (siehe Bezugszeichen 7), meldet die Komponente 2c an die Komponente 2d zurück, mit welcher aktuellen Drehzahl die Pumpe betrieben wird, wie es mit dem Bezugszeichen 8 angezeigt ist. Darüber hinaus meldet die Komponente 2c an die Komponente 2b, welche die Hydraulik der Pumpe darstellt, die aktuelle Drehzahl 6.

Während die Komponente 2c keine Anschlüsse innerhalb der Disziplin, d.h. der eigenen Komponente 2c, aufweist, besitzt die Komponente 2b als Anschlüsse innerhalb der Disziplin die ankommende Stoffmenge (Zufluss) und die ausgehende Stoffmenge (Abfluss). Die Komponente 2d besitzt als Anschlüsse innerhalb der Disziplin das Einschalten und das Ausschalten der Pumpe, den Vorgabewert für die pro Zeiteinheit von der Pumpe zu pumpende Stoffmenge sowie den Rückkopplungswert von der Mechanik 2c, mit welcher aktuellen Drehzahl die Pumpe betrieben wird.

Anstelle der Automatisierung 2d können auch Pumpenfahrpläne eingesetzt werden, um dadurch die Pumpe zu steuern.

Unter Einsatz von Modellerstellungstechniken können aus dem projektierten Systemmodell oder Planungswerkzeug 1 der Pumpe automatisch alle ausgewählten disziplinspezifischen Simulationskomponenten FMUb-FMUd des interdisziplinären Simulationsmodells 9 der Pumpe erstellt werden. Die Definition der Schnittstellen 21-35, welche für die Co-Simulation wichtig sind, erfolgt ebenfalls automatisch, so dass die Simulationskomponenten FMUb-FMUd vollständig gekoppelt sind, was anhand der Beschreibung der Kopplung 5 der Simulationskomponenten FMUb-FMUd hinterlegt wird. Damit ist das interdisziplinäre Simulationsmodell 9 des physikalisch-technischen Geräts, d.h. der Pumpe, vollständig erstellt.

Bei dem in Figuren 3 und 4 dargestellten Beispiel wird die Pumpe automatisch durch die Automatisierung 2d eingeschaltet und ausgeschaltet, wozu die Automatisierung 2d an ihrer Ausgangsschnittstelle die an-Ausgabe 32 und die aus-Ausgabe 33 entsprechend setzt. Zusätzlich setzt die Automatisierung 2d eine Drehzahl, welche über die Drehzahl-Ausgabe 31 ausgangsseitig mitgeteilt wird. Die Mechanik 2c liest die Information, welche von der Automatisierung 2d bereitgestellt wird, über ihre eingangsseitigen Schnittstellen 21-23. Basierend auf diesen Sollvorgaben der Automatisierung 2d kann der Motor der Pumpe auf die gewünschte Drehzahl eingestellt werden. Die Mechanik 2c meldet die aktuelle Drehzahl über ihre Schnittstelle 25 an die Automatisierung 2d zurück.

Basierend auf der aktuellen Drehzahl der Pumpe können hydraulische Abhängigkeiten der Pumpe beispielsweise anhand von drehzahlabhängigen Kennlinien für die Pumpe bestimmt werden.

In Fig. 5 ist der Flussplan eines erfindungsgemäßen Verfahrens zur Erstellung eines interdisziplinären Simulationsmodells eines physikalisch-technischen Geräts dargestellt.

Im ersten Schritt S1 werden disziplinspezifische Komponenten eines Planungswerkzeugs für das zu simulierende physikalisch-technische Gerät (z.B. eine Pumpe) erstellt. Im zweiten Schritt S2 werden Simulationskomponenten für jede relevante disziplinspezifische Komponente des Geräts automatisch beispielsweise ausgehend von den Informationen des Planungswerkzeugs erstellt. Im dritten Schritt S3 werden die Schnittstellen der Simulationskomponenten insbesondere ausgehend von Informationen des Planungswerkzeugs automatisch erstellt, wodurch dann zusammen mit den Simulationskomponenten das Simulationsmodell erstellt ist.

## Patentansprüche

1. Computer-implementiertes Verfahren zur Erstellung eines interdisziplinären Simulationsmodells (9) eines physikalisch-technischen Geräts,
wobei das Verfahren folgende Schritte umfasst:
basierend auf einer vorgegebenen Datenbank, die indikativ für das physikalisch-technische Verhalten des Geräts ist: Erstellen von disziplinspezifischen Simulationskomponenten (FMUb-FMUd) des Geräts, wobei jede disziplinspezifische Simulationskomponente (FMUb-FMUd) einen entsprechenden disziplinspezifischen Aspekt des physikalisch-technischen Verhaltens des Geräts modelliert,
Erstellen mindestens einer Schnittstelle (21-35) für jede der Simulationskomponenten (FMUb-FMUd), so dass Zustände der Simulationskomponenten (FMUb-FMUd) mittels der Schnittstellen (21-35) miteinander synchronisierbar sind,
wobei die erstellten Simulationskomponenten (FMUb-FMUd) zusammen mit den Schnittstellen (21-35) das Simulationsmodell (9) darstellen.

2. Verfahren nach Anspruch 1,
wobei das Erstellen zumindest einer der Simulationskomponenten (FMUb-FMUd) ein Erstellen eines Funktionsmodells des physikalisch-technischen Verhaltens des Geräts in der jeweiligen Disziplin der jeweiligen Simulationskomponente (FMUb-FMUd) umfasst,
wobei mittels des Funktionsmodells zu bestimmten Simulationszeitpunkten jeweils anhand eines Eingangswert, der zum jeweiligen Simulationszeitpunkt an der entsprechenden mindestens einen Schnittstelle (21-35) der jeweiligen Simulationskomponente (FMUb-FMUd) anliegt, ein Ausgangswert der jeweiligen Simulationskomponente (FMUb-FMUd) bestimmt wird, und
wobei der Ausgangswert der jeweiligen Simulationskomponente (FMUc; FMUd) über die Schnittstelle (21-25) an eine weitere Simulationskomponente (FMUb; FMUc) übergeben wird.

3. Verfahren nach Anspruch 2,
wobei das Funktionsmodell für zumindest eine der Simulationskomponenten (FMUb-FMUd) eine numerische Simulation auf Grundlage von physikalischen Differenzialgleichungen und/oder signalflussbasierte Beschreibungen und/oder diskrete Systembeschreibungen umfasst.

4. Verfahren nach Anspruch 2 oder 3,
wobei das Funktionsmodell für zumindest eine der Simulationskomponenten (FMUb-FMUd) eine vorgegebene analytische Abhängigkeit und/oder Randwerte umfasst.

5. Verfahren nach Anspruch 4,
wobei die vorgegebene analytische Abhängigkeit und/oder die Randwerte in Abhängigkeit von einer Plausibilitätsüberprüfung einer Interoperabilität zwischen den Simulationskomponenten (FMUb-FMUd) auf Grundlage der Schnittstellen (21-35) ausgewählt wird.

6. Verfahren nach einem der vorangehenden Ansprüche,
wobei die Schnittstellen (21-35) als functional mockup interface erstellt werden.

7. Verfahren nach einem der vorhergehenden Ansprüche,
wobei die disziplinspezifischen Simulationskomponenten (FMUb-FMUd) automatisch ausgehend von einer zugehörigen physikalischen Komponente des Geräts erstellt werden, oder
dass die disziplinspezifischen Simulationskomponenten (FMUb-FMUd) für die zugehörige physikalische Komponente des Geräts erfasst werden.

8. Verfahren nach einem der vorhergehenden Ansprüche,
wobei die vorgegebene Datenbank eine objektorientierte Bibliothek eines Projektierungswerkzeugs zur Anlagensteuerung umfasst.

9. Verfahren nach einem der vorhergehenden Ansprüche,
wobei vorgebbar ist, welche Disziplinen zu betrachten sind, und
dass nur diejenigen disziplinspezifischen Simulationskomponenten (FMUb-FMUd) für das Gerät erstellt werden, welche den zu betrachtenden Disziplinen entsprechen.

10. Verfahren nach einem der vorhergehenden Ansprüche,
wobei das Erstellen der Schnittstellen (21-35) ein automatisches Erstellen jeweils einer Kopplungstabelle für zwei der Simulationskomponenten (FMUb, FMUc; FMUc, FMUd), deren Schnittstellen (21, 31; 22-25, 32-35) direkt gekoppelt sind, ausgehend von Abhängigkeiten der beiden Simulationskomponenten (FMUb, FMUc; FMUc, FMUd), welche in der vorgegebenen Datenbank beschrieben sind, umfasst, und
wobei die Kopplungstabellen ein Zusammenwirken zwischen den Schnittstellen (21-35) beschreiben.

11. Computer mit Prozessor und Speichermitteln,
wobei der Prozessor ausgestaltet ist, um Programmcode, welcher in den Speichermitteln gespeichert ist, auszuführen, um dadurch ein interdisziplinäres Simulationsmodell (9) eines physikalisch-technischen Geräts zu erstellen,
um basierend auf einer vorgegebenen Datenbank, die indikativ für das physikalisch-technische Verhalten des Geräts ist, disziplinspezifische Simulationskomponenten (FMUb-FMUd) des Geräts zu erstellen, wobei jede disziplinspezifische Simulationskomponente (FMUb-FMUd) einen entsprechenden disziplinspezifischen Aspekt des physikalisch-technischen Verhaltens des Geräts modelliert, und
mindestens eine Schnittstelle (21-35) für jede der Simulationskomponenten (FMUb-FMUd) zu erstellen, so dass Zustände der Simulationskomponenten (FMUb-FMUd) mittels der Schnittstellen (21-35) miteinander synchronisierbar sind,
wobei die erstellten Simulationskomponenten (FMUb-FMUd) zusammen mit den Schnittstellen (21-35) das Simulationsmodell (9) darstellen.

12. Computer nach Anspruch 11,
wobei der Computer ausgestaltet ist, um eine Simulation des physikalisch-technischen Geräts unter Verwendung des interdisziplinären Simulationsmodells (9) durchzuführen.

13. Computer nach Anspruch 11 oder 12,
wobei der Computer zur Durchführung des Verfahrens nach einem der Ansprüche 1-10 ausgestaltet ist.

14. Computerprogrammprodukt, welches ein Programm umfasst und direkt in Speichermittel eines Computers ladbar ist, mit Programm-Mitteln, um alle Schritte des Verfahrens nach einem der Ansprüche 1-10 auszuführen, wenn das Programm in einem Prozessor des Computers ausgeführt wird.

15. Elektronisch lesbarer Datenträger mit darauf gespeicherten elektronisch lesbaren Steuerinformationen, welche derart ausgestaltet sind, dass sie bei Verwendung des Datenträgers in einem Prozessor eines Computers das Verfahren nach einem der Ansprüche 1-10 durchführen.
